(19) Europäisches Patentamt
European Patent Office
Office européen des brevets

(11) **EP 1 575 278 A1**

(12) **EUROPEAN PATENT APPLICATION**
published in accordance with Art. 158(3) EPC

(43) Date of publication:
**14.09.2005 Bulletin 2005/37**

(51) Int Cl.⁷: **H04N 5/232**

(21) Application number: **03777337.1**

(86) International application number:
**PCT/JP2003/015652**

(22) Date of filing: **08.12.2003**

(87) International publication number:
**WO 2004/054243 (24.06.2004 Gazette 2004/26)**

(84) Designated Contracting States:
**AT BE BG CH CY CZ DE DK EE ES FI FR GB GR
HU IE IT LI LU MC NL PT RO SE SI SK TR**

(30) Priority: **06.12.2002 JP 2002356044**

(71) Applicant: **NEC CORPORATION
Tokyo 108-8001 (JP)**

(72) Inventor: **SHIBAYAMA, Hiroaki,
c/o NEC Access Technica, Ltd.
Kakegawa-shi, Shizuoka 436-8501 (JP)**

(74) Representative: **Betten & Resch
Patentanwälte,
Theatinerstrasse 8
80333 München (DE)**

(54) **CAMERA-EQUIPPED MOBILE TERMINAL**

(57) A camera-equipped mobile terminal has external memory (63) in a camera module. In a digital camera mode, after image data ($D_{P1}$) has been temporarily buffered in external memory (63), encoder (74) performs a compression-coding processing on the image data from external memory (63) to convert the image data into image data ($D_{P2}$) in a time-division manner during a vacant time period in which no process are performed in resize processing unit (76) and format transforming unit (77), and stores the image data ($D_{P2}$) in external memory (63). CPU (53) thereafter captures image data ($D_{P2}$) from external memory (63) as required. In a mobile camera mode, a power source for external memory (63) is turned off. After image data ($D_{P1}$) has been temporarily buffered in internal memory (75), encoder (74) performs the compression-coding processing on image data ($D_{P1}$) from internal memory (75) to convert image data ($D_{P1}$) into image data ($D_{P2}$) in a time-division manner during the vacant time period, and then stores image data ($D_{P2}$) in internal memory (75). CPU (53) thereafter captures image data ($D_{P2}$) from internal memory (75), as required.

Fig.3

**Description**

Background of the Invention

The present invention relates generally to a camera-equipped mobile terminal, and more particularly to a camera-equipped mobile terminal capable of processing image data obtained by shots of an accessory camera to display the processed image data on a display device or transmitting the processed image data in E-Mail.

Background Art

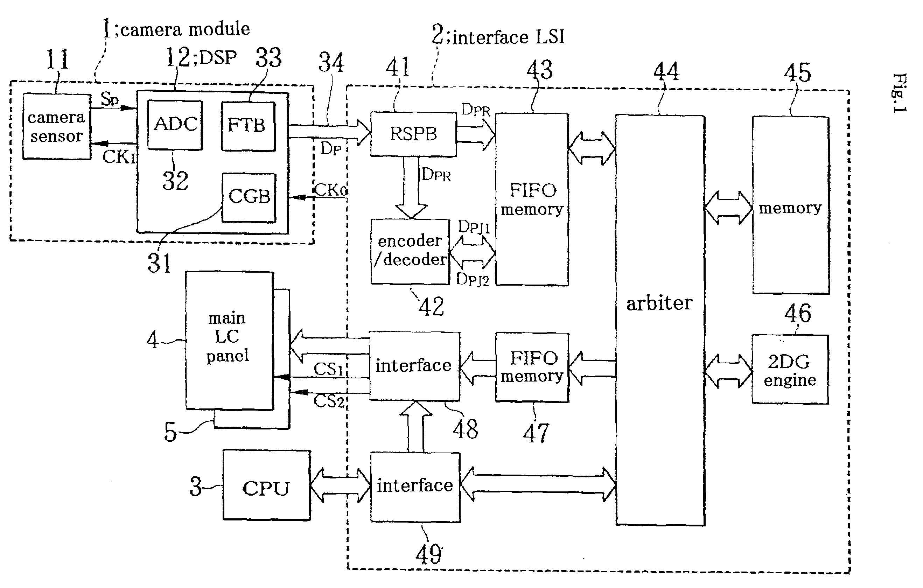

Fig. 1 illustrates an example of an essential part of a conventional camera-equipped mobile terminal. The mobile terminal herein is a generic term including a portable phone and a PHS (Personal Handyphone system).

This example of a camera-equipped mobile terminal comprises camera module 1, interface 2, CPU (Central Processing Unit) 3, main LC panel 4, and sub LC panel 5.

Camera module 1 includes camera sensor 11 and digital signal processor (DSP) 12. Camera sensor 11 is, for example, a megapixel CMOS sensor that record with resolution of 1280 x 960 pixels and provides an analog picture signal $S_p$ composed of analog picture red, green and blue signals in accordance with a clock signal $CK_1$ with a frequency of about 48 MHz supplied from DSP 12.

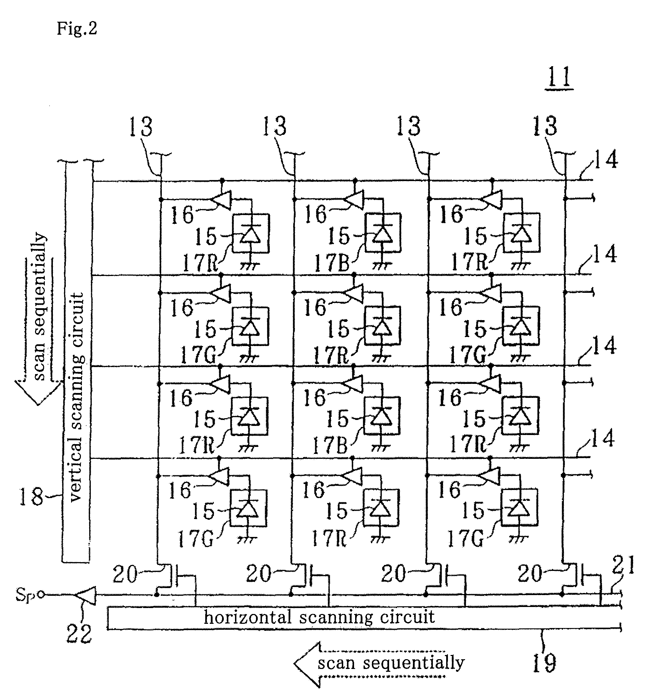

As shown in Fig. 2, camera sensor 11 has respective pixels disposed at the intersections of 960 horizontal scanning lines 13 and 1280 vertical scanning lines 14, the horizontal scanning lines being arranged in the row direction at a predetermined interval and the vertical scanning lines being arranged in the column direction at a predetermined interval. Associated with each pixel are photodiode 15, and amplifier 16 that amplifies an output current of the photodiode. Each photodiode 15 has on its light incident surface red (R), green (G) and blue (B) optical filters $17_R$, $17_G$, $17_B$. When supplied with clock signal $CK_1$ with about 48 MHz frequency, for example, from DSP 12, vertical scanning circuit 18 successively produces vertical scanning signals in synchronization with clock $CK_1$ to apply them to 960 vertical scanning lines 14, thereby activating amplifiers 16 connected thereto in succession. At the same time, horizontal scanning circuit 19 successively produces horizontal scanning signals in synchronization with clock signal $CK_1$, and applies the horizontal scanning signals to the gate electrodes of MOS transistors 20 connected to respective ends of 1280 horizontal scanning lines 13. As a result, each photodiode provides an output current, which is amplified by a corresponding amplifier 16 and is then supplied to image read line 21 via horizontal scanning line 13. The amplified current is further amplified by amplifier 22, and is then output as an analog picture signal $S_p$ composed of analog picture red, green and blue signals.

DSP 12 includes clock generating block (CGB) 31, analog to digital converter (ADC) 32, and format transforming block (FTB) 33. CGB 31 generates clock signal $CK_1$ with a frequency of about 48 MHz in accordance with clock signal $CK_0$ with a frequency of about 24 MHz supplied from interface LSI 2, and provides clock signal $CK_1$ to camera sensor 11. ADC 32 converts analog picture signals $S_p$ composed of analog picture red, green and blue signals supplied from camera sensor 11 to digital image data composed of digital red data R, green data G and blue data B, each being of 8 bits per pixel and provides the digital image data to FTB 33. FTB 33 transforms red data R, green data G and blue data B in RGB format to image data $D_p$ having components of luminance data Y, color difference data U between luminance data Y and red data R and color difference data V between luminance data Y and blue data B that are YUV-format image data, and provides image data $D_p$ to interface LSI 2 via 8-bit-wide bus 34. In this example, image data $D_p$ is 8 bits in total length with 4 bits for luminance data Y, 2 bits for color difference data U and 2 bits for color difference data V. The general transformation formula is presented below between red data R, green data G, and blue data B, luminance data Y, color difference data U and V.

$$Y = R*0.299 + G*0.587 + B*0.114 \qquad (1)$$

$$U = 0.654*(B-Y)+128 = -R*0.168-G*0.331$$
$$+ B*o.500 + 128 \qquad (2)$$

$$V = 0.713*x(R-Y)+128=R*0.500-G*0.419$$
$$-B*0.081 + 128 \qquad (3)$$

Interface LSI2 comprises resize processing block (RSPB) 41, encoder/decoder 42, FIFO (first-in first-out memory) 43, arbiter 44, memory 45, two-dimensional graphics (2DG) engine 46, FIFO memory 47 and interfaces 48, 49. RSPB 41 performs resizing of image data $D_p$ with 8 bits per pixel and 1280 x 960 pixels per frame, taken by camera sensor 11, into image data $D_{pR}$ with 8 bits per pixel and 320 x 240 pixels per frame in YUV format, in order to display image data $D_p$ on main LCD panel 4 or sub LCD panel 5 with resolution of 320 x 240 pixels, called QVGA (quarter video graphic array), and then delivers image data $D_{pR}$ to encoder/decoder 42 and FIFO 43.

Encoder/decoder 42 performs compression-coding processing on image data $D_{PR}$ in YUV format supplied from RSPB 41 to generate image data $D_{PJ1}$ in JPEG (joint photographic experts group) format, and stores image data $D_{PJ1}$ in FIFO memory 43 .Also, encoder/decoder 42 performs extended-decompression-decoding processing on JPEG-format image data $D_{PJ1}$, supplied from FIFO memory 43, to generate image data $D_{PJ2}$ in YUV-format, and stores image data $D_{PJ2}$ in FIFO memory 45. Herein, JPEG format refers to a format of a graphic file compliant with the still-image compression/decompression scheme standardized by the joint organization of the International Organization for Standardization (ISO) and the International Telecommunication Union-Telecommunication Standardization Sector (ITU-T), which has been proceeding with standardization of color still image coding scheme.

FIFO memory 43 stores therein image data $D_{PR}$ output from RSPB 41 or image data $D_{PJ1}$ output from encoder/decoder 42 in a first-in queuing manner in synchronization with a certain clock signal, reads the stored image data $D_{PR}$ or image data $D_{PJ1}$ in a first-out queuing manner and in synchronization with another clock signal out of synchronization with the above-described certain clock signal, and delivers the read data to arbiter 44 or encoder/decoder 42. Under the control of interface 49, arbiter 44 manages write requests and read requests to memory 45, from RSPB 41, encoder/decoder 42, 2DG engine 46 and interface 48 or 49 (these constituent elements may be collectively referred to as "a device") and arbitrates between these requests. Memory 45 has a storage capacity of 225 kilobytes and is configured such that image data supplied from a device to which arbiter 44 has given permission, is written thereto and data stored therein is read therefrom.

2DG engine 46 performs two-dimensional rendering processing, such as bit-map processing , rendering of straight or curved lines, filling-in an area with a specified color , etc., on an image data read from memory 45 with the permission of arbiter 44. FIFO memory 47 stores therein an image data supplied from arbiter 44 in a first-in queuing manner in synchronization with a prescribed clock signal, reads the stored image data in a first-out queuing manner in synchronization with another clock frequency out of synchronization with the above-described prescribed clock, and then provides the read data to interface 48. Under the control of Interface 49, interface 48 supplies a first chip select signal $CS_1$ to main LC panel 4 to activate it, while reading an image data from memory 45 with the permission of arbiter 44 to supply the image data to main-LC panel 4 through FIFO 47. Interface 48 also supplies a second chip select signal $CS_2$ to sub LC panel 5 to activate it, while reading an image data from memory 45 with the permission of arbiter 44 to supply the image data to sub-LC panel 5 through FIFO 47. Interface 49 controls arbiter 44 and interface 48.

CPU 3 runs programs stored in program memory (not shown) to control respective units of the camera-equipped mobile terminal. CPU3 also directly accesses main LC panel 4 and sub LC panel 5 through interfaces 48 and 49. Main LC panel 4 and sub LC panel 5 display internal information of the mobile terminal such as the remaining level of battery life, information regarding antenna's sensitivity, etc., telephone numbers of call partners, E-mail messages, pictures attached to the E-mail to be sent to the partners, pictures attached to the E-mails sent from the partners, and pictures representative of contents provided by a variety of content providers of WWW (World Wide Web) servers. In addition, in a camera mode, main LC panel 4 and sub LC panel 5 may not only be utilized as camera finders but also display pictures of camera-shots.

It is to be noted that as far as prior-art searches that were conducted, are concerned, no documents could not be found that specifically described the above described prior art, but the image processing in the conventional camera-equipped mobile terminal is disclosed in JP 2002-035136 that was proposed by the applicant.

With the above conventional camera-equipped mobile terminal, the amount of image data $D_P$ delivered to interface LSI 2 from camera module 1 via bus 34 is 2,457,600 bytes with 1280 x 960 pixels per frame and 8 bits per pixel, requiring a long period of data-processing time in interface LSI 2. To address this problem, it may be conceivable to raise the frequency of the clock signal used in interface LSI 2 in order to shorten the data-processing time. This, however, entails an increase in the current consumption, inconveniently shortening the battery life in a mobile terminal that employs a battery as a power source. Moreover, the rise of the frequency of the clock signal used in interface LSI2 may exert harmful influence, such as generation of noise etc., on a clock signal used in a radio controller that processes radio signals.

Furthermore, while the above-described conventional camera-equipped mobile terminal is configured to perform almost all the image processing in interface LSI 2, there has recently been a growing tendency for making interface LSI 2 with a megapixel system, involving a further increase in the memory capacity needed for memory 45 used in the aforementioned image processing. In order to overcome this problem, it may be conceivable to constitute memory 45 with SRAM. The formation of SRAM within interface LSI 2, however, necessitates a large chip area, which in turn causes rises in the price of interface LSI 2 and thus in the price of the camera-equipped mobile terminal.

Disclosure of the Invention

In view of the above problems, it is an object of the present invention to provide a camera-equipped mobile terminal that is capable of processing image data with a high-pixel resolution supplied from a camera in a short period of data-processing time even with a low frequency clock signal and memory with a small storage capacity.

A camera-equipped mobile terminal according to the present invention comprises a camera module, a control unit, a display device, and an interface unit arranged between the camera module, the control unit and display device,

The camera module includes a camera sensor that records with a resolution of a first number of pixels and provides a picture signal in a first format corresponding to a picture that has been shot, a digital signal processor that performs image processing on the picture signal, and an external memory.

The digital signal processor includes an analog/digital converter that converts the picture signal into a first image data, an internal memory, an encoder that performs compression-coding processing on the first image data to produce a second image data, a resize processing unit that resizes the first image data into a third image data having a second number of pixels, and a format transforming unit that transforms the third image data into a fourth image data in a second format and supplies the fourth image data to the interface unit via a first bus to display the fourth image data on the display device for a camera finder.

In a digital camera mode, the digital signal processor temporarily buffers the first image data in the external memory. Thereafter, the encoder performs a compression-coding processing on the first image data read from the external memory in a time division manner to produce the second image data using the internal memory as buffer, during a vacant time period in which no process is performed in the resize processing unit and format transforming unit, and then stores the second image data in the external memory. The control unit captures the second image data stored in the external memory via a second bus and the interface unit, as required.

In a mobile camera mode, a power source for the external memory is turned off, and the digital signal processor temporally stores the first image data in the internal memory. Thereafter, the encoder performs the compression-coding processing on the first image data read from the internal memory in a time division manner to produce the second image data using the internal memory as buffer during the above-described vacant time, and stores the second image data in the internal memory. The control unit captures the second image data stored in the internal memory via a second bus and the interface unit, as required.

As described above, in the present invention, the external memory is provided in the camera module; in the digital camera mode, image data for still image processing is buffered in the external memory, compression-coding process on the still image is performed during the vacant time period in which no process is performed in a camera finder path, and the image data for a camera finder and the image data for the still image processing are delivered to the interface unit via separate serial paths.

This construction allows, even with a low frequency clock signal and a small storage-capacity memory, image data having high-resolution pixels, supplied from a camera, to be processed in a short period of data-processing time. Consequently, it is possible to reduce power consumption and hence extend the battery life. Furthermore, generation of noise can also be suppressed, and it is possible to configure the interface LSI and the camera-equipped mobile terminal at a low price.

Brief Description of the Drawings

Fig. 1 is a block diagram illustrating a structural example of an essential part of a conventional camera-equipped mobile terminal;

Fig. 2 is a circuit diagram illustrating a structural example of a part of camera sensor 11 that constitutes the terminal;

Fig. 3 is a block diagram illustrating a structure of an essential part of a camera-equipped mobile terminal according to an embodiment of the present invention;

Fig. 4 is a block diagram illustrating the structure of DSP 62 that constitutes the terminal;

Fig. 5 is a block diagram illustrating the operation of the terminal in a digital camera mode;

Fig. 6 is a block diagram illustrating the operation of the terminal in a mobile camera mode;

Fig. 7 is a diagram explaining the role of each RAM in each mode in the terminal;

Fig. 8 is a diagram explaining the comparison between the prior art and the embodiment regarding the operation clock signals of the camera module and interface LSI in each mode; and

Fig. 9 is a diagram explaining the comparison between the prior art and the embodiment regarding the number of gates that constitute the camera module and interface LSI.

Best Mode for Carrying Out the Invention

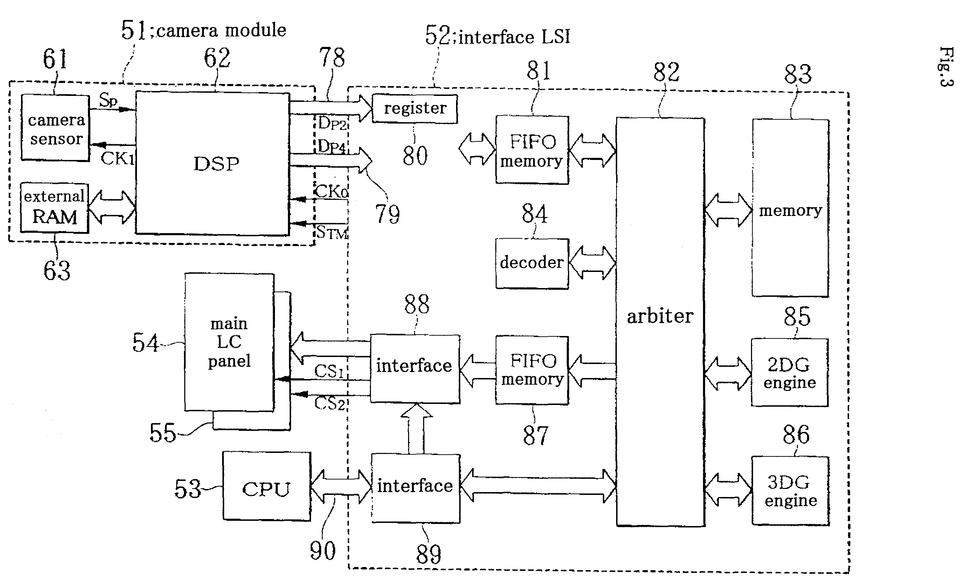

Referring now to Fig. 3, a camera-equipped mobile terminal according to an embodiment of the present invention comprises camera module 51, interface 52, CPU 53, main LC panel 54 and sub LC panel 55.

Camera module 51 includes camera sensor 61, DSP 62 and external RAM 63. Camera sensor 61 is, for example, a megapixel CMOS sensor that records with resolution 1280 x 960 pixels and provides an analog picture signal $S_p$ composed of analog picture red, green and blue signals in accordance with a clock signal $CK_1$ with a frequency of about 48 MHz supplied from DSP 12. Since the structure of camera sensor 61 is substantially the same as that of camera sensor 11 shown in Fig. 2, its explanation is omitted.

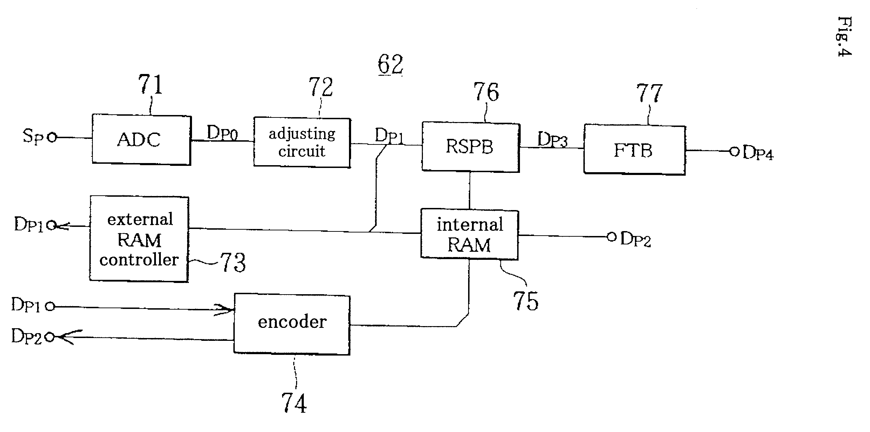

As shown in Fig. 4, DSP 62 includes ADC 71, adjusting circuit 72, external RAM controller 73, encoder 74, internal RAM 75, RSPB 76, and FTB 77.

DSP 62 operates on a clock signal having a frequency of about 12 MHz, about 24 MHz, or about 48 MHz, supplied from interface LSI 52 depending on the operation mode.

ADC 71 converts an analog picture signal $S_p$ composed of analog picture red, green and blue signals delivered from camera sensor 51 into digital image data $D_{P0}$ composed of digital red data R, green data G and blue data B, each being of 8 bits per pixel and delivers digital image data $D_{P0}$ to adjusting circuit 72.

Adjusting circuit 72 performs image processing, such as white balancing, exposure-gain adjustment, etc., on image data $D_{P0}$ and subsequently supplies the processed image data to external RAM controller 73 and RSPB 76 as image data $D_{P1}$.

External RAM controller 73 temporally stores image data $D_{P1}$ in external RAM 63, reads the stored image data, and supplies the read data to encoder 74 and interface LSI 52.

Encoder 74 performs compression-coding processing on image data $D_{P1}$ read from external RAM 63 under the control of external RAM controller 73 to convert image data $D_{P1}$ to image data $D_{P2}$ in JPEG format using internal RAM 75 as a compression-coding processing buffer, and stores image data $D_{P2}$ in external RAM 63.

Internal RAM 75 has a memory capacity of 80 kilobytes and is used as a buffer memory during various data processing operations, for example, the above compression-coding processing etc. It to be noted that image data $D_{P2}$ in JPEG format is read from external RAM 63 under the control of external RAM controller 73 and is supplied to interface LSI 52 via serial bus 78. Serial bus 78 starts its operations in response to a shot timing notification signal $S_{TM}$ to notify a timing that shots are taken by the camera, delivered from interface LSI 52.

RSPB 76 performs resizing processing to resize image data $D_{P1}$ with 8 bits per pixel and 1280 x 960 pixels per frame into image data $D_{P3}$ with 8 bits per pixel and 320 x 240 pixels per frame using internal RAM 75 and then delivers image data $D_{P3}$ to FTB 77.

FTB 77 converts image data $D_{P3}$ composed of red data R, green data G and blue data B that are image data in RGB format (a first format) into image data $D_{p4}$ having components of luminance data Y, color difference data U and V that are image data in YUV format (a second format), and delivers image data $D_{p4}$ to interface LSI 152 via 16-bit-wide bus 79.

External RAM 63 shown in Fig. 3 has, for example, a memory capacity of 4 megabytes, exhibiting a small chip size but a large capacity due to the small number of circuit components per memory cell, as with a synchronous DRAM. RAM 63 is thus capable of a high-speed operation and is an inexpensive memory. This external RAM 63 functions as buffer memory for buffering image data in RGB format in a digital camera mode described later, while it has the capability of switching off the power source in a mobile camera mode described later.

Interface LSI 52 operates on about a 48 MHz clock signal and includes register 80, FIFO memory 81, arbiter 82, memory 83, decoder 84, 2DG engine 85, 3DG engine 86, FIFO memory 87, and interfaces 88, 89.

Register 80 temporarily holds image data $D_{P2}$ supplied from camera module 51.

FITO memory 81 stores therein image data $D_{P2}$ or image data $D_{P4}$ supplied from camera module 51 in a first-in queuing manner in synchronization with a certain clock signal, reads the stored image data $D_{P2}$ or image data $D_{P4}$ in a first-out queuing manner in synchronization with another clock signal out of synchronization with the certain clock signal, and delivers the read image data to memory 83 or decoder 84 through arbiter 82.

Arbiter 82 is controlled by interface 89, and manages write requests and read requests to memory 83, from FIFO memory 81, decoder 84, 2DG engine 85, 3D engine 86 and interface 88 or 89 (these constituent elements may be collectively referred to as "a device") and arbitrates between these requests.

Memory 83 has a memory capacity of 320 kilobytes and is configured such that image data supplied from the device to which arbiter 82 has given permission is written therein and the stored data is read therefrom.

Decoder 84 performs extended decompression-decoding processing on image data in JPEC format, read from memory 83 with the permission of arbiter 82 and supplied through arbiter 82, to convert the image data into image data in YUV format, and stores the converted image data in memory 83 through arbiter 82.

2DG engine 85 performs two-dimensional rendering processing, such as bit-map processing , rendering of straight or curved lines, filling-in an area with a specified color ,or the like, on the image data read from memory 83 with the permission of arbiter 82.

3DG engine 86 performs three-dimensional rendering processing using predetermined three-dimensional graphics-drawing functions on image data read from memory 83 with the permission of arbiter 82.

FIFO memory 87 stores therein image data read from memory 83 and supplied from arbiter 82, in a first-in queuing manner and in synchronization with a certain clock signal, reads the stored image data in a first-out queuing manner and in synchronization with another clock signal out of synchronization with the above-described certain clock signal, and delivers the read data to interface 88.

Under the control of Interface 89, interface 88 supplies a first chip select signal $CS_1$ to main LC panel 54 to activate it, while reading image data from memory 83 with the permission of arbiter 82 to supply the image data to main LC panel 54 via FIFO 47. Interface 88 also supplies a second chip select signal $CS_2$ to sub LC panel 55 to activate it, while reading image data from memory 87 with the permission of arbiter 82 to supply the image data to sub-L C panel 55 through FIFO 87.

Interface 89 controls arbiter 82 and interface 88.

CPU 53 is connected to interface LSI 52 via 32-bit high-speed memory bus 90 and runs a program stored in program memory (not shown) to control the respective units of the camera-equipped mobile terminal. CPU 53 also directly accesses main LC panel 54 and sub LC panel 55 through interface 89 and interface 88.

Main LC panel 54 and sub LC panel 55 have a display resolution of, for example, 320 x 240 pixels and display internal information of the mobile terminal such as the remaining level of battery life, information regarding the antenna's sensitivity, etc., telephone numbers of call partners, E-mail messages, pictures attached to the E-mail to be sent to the partners, pictures attached to the E-mail sent from the partners, and pictures representative of contents provided by a variety of content providers of WWW servers. In addition, in the camera mode, main LC panel 54 and sub LC panel 55 may not only be utilized as camera finders but also display pictures of camera-shots.

Regarding the operations of the camera-equipped mobile terminal having the above configuration, operation in the camera mode will now be described. The camera mode includes a mobile camera mode and a digital camera mode. The mobile camera mode refers to a mode in which smaller-sized images, for example, images of 320 x 240 pixels, are taken and stored. This mode allows the user to easily enjoy images acquired by shootings , for example, by attaching the images to E-mail, or by utilizing the images as so-called wallpaper. The digital camera mode refers to a mode in which larger-sized images, in this example, images of 1280 x 960 pixels, are taken and stored. This mode allows the user to enjoy high-resolution images by storing images that have been shot in an SD (Secure Digital) memory card (registered trade mark) and displaying the stored images on a personal computer, a handheld terminal, etc. which can use SD memory card. The digital camera mode also enables the images as they are shot, to be converted into smaller-sized images (thumbnail data) having the same size as the picture size captured in the mobile camera mode for storage.

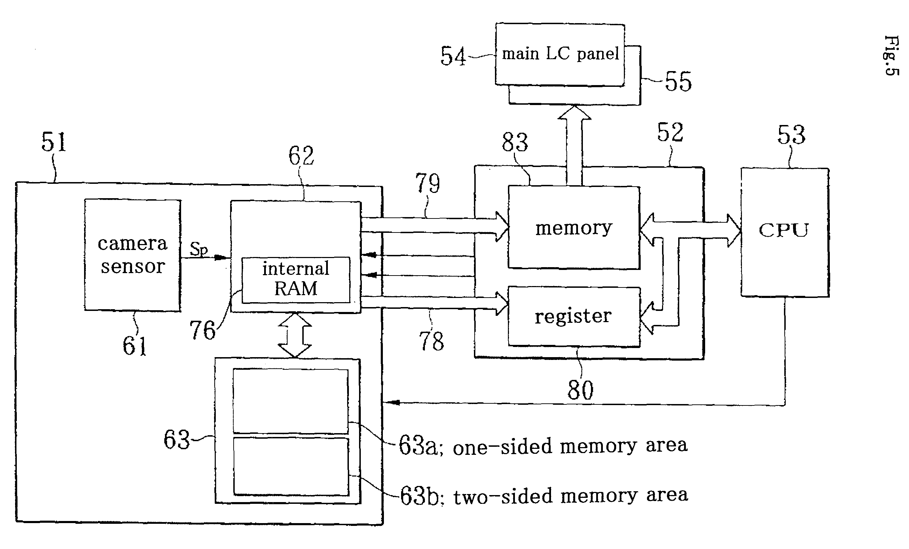

Operation in the digital camera mode will first be described with reference to Fig. 5. A clock signal having about 48 MHz frequency (a first frequency) is supplied to DSP 2 from interface LSI 52. When analog image signal Sp is supplied from camera sensor 61 to DSP 62 as shown in Fig. 5, ADC 72, shown in Fig. 4, converts analog image signal Sp into digital image data $D_{P0}$ with 8 bits per pixel. In this example, since camera sensor 11 records with resolution of 1280 x 960 pixels, one pixel being 8 bits per pixel, its data amounts to 1,228,800 bits. The above image data $D_{P0}$ is subjected to image processing, such as white balancing, exposure-gain adjustment, etc., in adjusting circuit 73, and the processed image data are subsequently stored directly in external RAM 63 as image data $D_{P1}$, that is controlled by external RAM controller 74, for buffering. The path in which this sequence of processing is performed is called still image process path. In this case, external RAM 63 may be configured as having a double buffering structure composed of one-sided memory area $63_a$ and two-sided memory area $63_b$, as shown in Fig. 5, for example, to enable time losses in the image processing to be recovered.

Furthermore, the above image data $D_{P1}$ are also supplied to RSPB 76 in order to use main LC panel 54 and sub LC panel 55 as camera finders and display image data $D_{P1}$ on the camera finders. Specifically, RSPB 76 performs resizing processing to resize image data $D_{P1}$ with 8 bits per pixel and 1280 x 960 pixels per frame into image data $D_{P3}$ with 8 bits per pixel and 320 x 240 pixels per frame, and then delivers the resized image data $D_{P3}$ to FTB 77. FTB 77 then converts image data $D_{P3}$ composed of red data R, green data G and blue data B that are image data in RGB format into image data $D_{p4}$ composed of luminance data Y, color difference data U and V that are image data in YUV format to supply image data $D_{p4}$ to interface LSI 52 via 16-bit-wide bus 79. Image data $D_{p4}$ are then supplied to main LC panel 54 or sub LC panel 55 through interface LSI 52 for display thereon. The process in which the above sequence of processing is performed is called a camera-finder path.

In the meantime, during a vacant time period in which no process is performed in the camera-finder path, encoder 74 operates on about 12 MHz clock signal, performs compression-coding processing on image data $D_{P1}$ read from external RAM 63 under the control of external RAM controller 73, to convert image data $D_{P1}$ into image data $D_{P2}$ in JPEG format in a time division manner using internal RAM 75 as a compression-coding processing buffer, and stores image data $D_{P2}$ in an unoccupied area of external RAM 63. The above process is typically designed to enable one frame of still image data to be compression-coded during a vacant time period in which 3-frame image data are processed in the camera-finder path. If the compression-coding processing cannot be performed with the above timing, the clock signal with about 12 MHz frequency may be multiplied using a PLL (Phase Locked Loop).

When the above compression-coding processing is completed, the completion is notified to interface LSI 52 and further to CPU 53. With this notification, CPU 53 can capture image data $D_{P2}$ stored in external RAM 63 through register 80 that constitutes interface 52 at required time, thereby realizing distributed processing. Moreover, the load of CPU 53 is reduced because CPU53 has no relation to image data $D_{P4}$ for a camera finder.

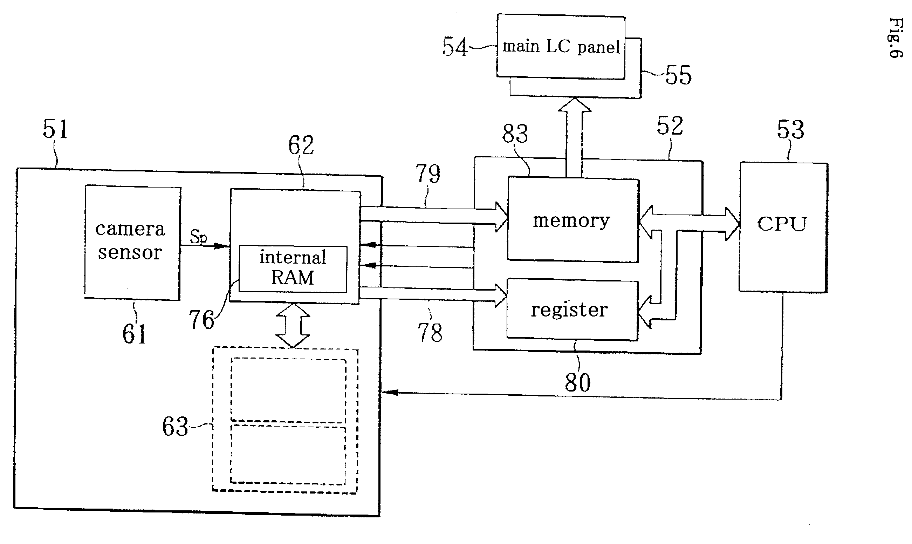

Operation in the mobile camera mode will next be described with reference to Fig. 6. In this mode, the power source for external RAM 63 is switched off to place external RAM 63 in an inactive state. The broken line of external RAM 63 in Fig.6 represents its inactive state. When analog picture signal $S_p$ is supplied from camera sensor 61 to DSP 62, to which a clock signal with about 12 MHz frequency (a second frequency) is supplied from interface LSI 52 as shown in Fig. 6, ADC 72 shown in Fig. 4 converts analog picture signal $S_p$ into digital image data $D_{P0}$ with 8 bits per pixel. The above digital image data $D_{P0}$ is subjected to image processing, such as white balancing, exposure-gain adjustment, etc., in adjusting circuit 73. The processed image data is buffered in internal RAM 75 for compression-coding as image data $D_{P1}$, and delivered to RSPB 76. In response, RSPB 76 performs resizing process on the above-described image data $D_{P1}$ to resize image data $D_{P1}$ with 8 bits per pixel and 1280 x 960 pixels per frame into image data $D_{P3}$ with 8 bits per pixel and 320 x 240 pixels per frame, stores the image data $D_{P3}$ in internal RAM 75 for buffering, and supplies the image data to FTB 77. FTB 77 then converts image data $D_{P3}$ composed of red data R, green data G and blue data B, that are image data in RGB format, into image data $D_{p4}$ composed of luminance data Y, color difference data U and V, that are image data in YUV format, and supplies the image data $D_{p4}$ to interface LSI 52 via 16-bit-wide bus 79. The image data $D_{p4}$ is then supplied to main LC panel 54 or sub LC panel 55 through interface LSI 52 for display thereon. The process path in which the above sequence of processing is performed is called a camera-finder path.

In the meantime, during a vacant time period in which no process is performed in the camera-finder path, encoder 74 operates on about 12 MHz clock signal, performs compression-coding processing on image data $D_{P1}$ read from the other area of internal RAM 75, to convert image data $D_{P1}$ into image data $D_{P2}$ in JPEG format in a time-division manner using internal RAM 75 as a compression coding buffer, and stores image data $D_{P2}$ in an unoccupied area of internal RAM 75. The above process is usually set in advance to correspond to three frames of the process in the camera-finder path, and is thus designed to enable still image data of one frame to be processed for a time period during which 3-frame image data are displayed on main LC panel or sub LC panel in the process of the camera-finder path. If the compression-coding processing cannot be performed with the above timing, the clock signal with about 12 MHz frequency may be multiplied using a PLL circuit.

When the above compression-coding processing is completed, the completion is notified to interface LSI 52 and further to CPU 53. With this notification, CPU 53 can capture image data $D_{P2}$ stored in internal RAM 75 through register 80 that constitutes interface 52, at required timing, thereby realizing distributed processing. Moreover, the load of CPU 53 is reduced because CPU53 has no relation to image data $D_{P4}$ for a camera finder.

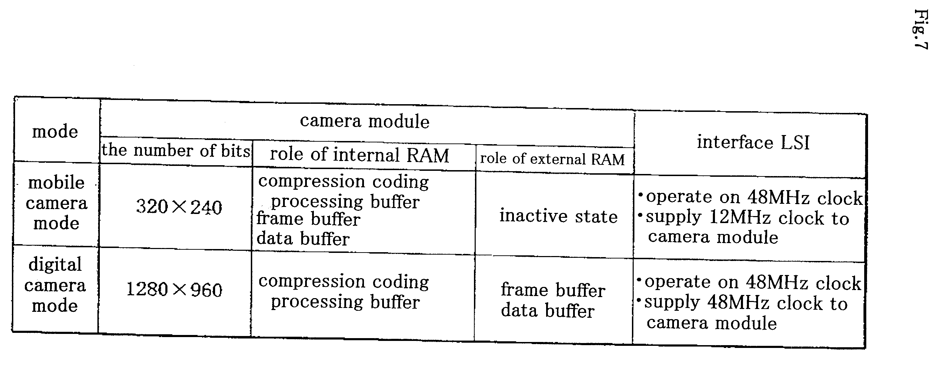

Fig. 7 illustrates the roles of internal RAM 75 and external RAM 63, and the clock signal supplied to interface LSI 52 in each of the mobile camera and digital camera modes of the camera-equipped mobile terminal in the above example. Specifically, in the mobile camera mode, because the number of pixels of image data to be processed is as small as 320 x 240 pixels, and because the frequency of a clock to be supplied is also low, sufficient image processing is possible using internal RAM 75 alone even if external RAM 63 is placed in an inactive state to reduce power consumption. In contrast, in the digital camera mode, because the number of pixels of image data to be processed is as large as 1280 x 960 pixels, and because the frequency of a clock to be supplied is high, image processing is performed using internal RAM 75 as a compression-coding processing buffer alone, while using external RAM 63 as frame buffer and data buffer, to thereby achieve distributed processing.

As described above, in the present embodiment, external RAM 63 is provided in camera module 51; in the digital camera mode, image data $DP_2$ for still image processing is buffered , the compression-coding processing of the still image is performed during a vacant time period in which no process is performed in the camera finder path, and image data $DP_4$ for a camera finder and image data $DP_2$ for the still image processing are delivered to interface LSI 52 through separate serial buses 78 and 79, respectively.

This construction allows compression-coding processing for an enormous amount of image data to be performed without requiring real-time operation, and also allows the load of CPU 53 to be distributed. In addition, a higher priority process in the camera finder path can be reliably performed. Furthermore, because the load of CPU 53 is distributed, the compression-coding processing can be performed completely without degrading real-time operation.

Consequently, even if a low-frequency clock signal is supplied to camera module 51 and the memory capacity of memory 83 constituting interface LSI 52 is small, high-resolution image data supplied from camera module 51 to interface LSI 52 can be processed in a short period of data-processing time. This results in the reduction in power consumption of the mobile terminal to extend the battery life. Moreover, because the frequency of the clock signal used in interface LSI 52 is low, detrimental influence of noise etc. due to a high frequency may be avoided.

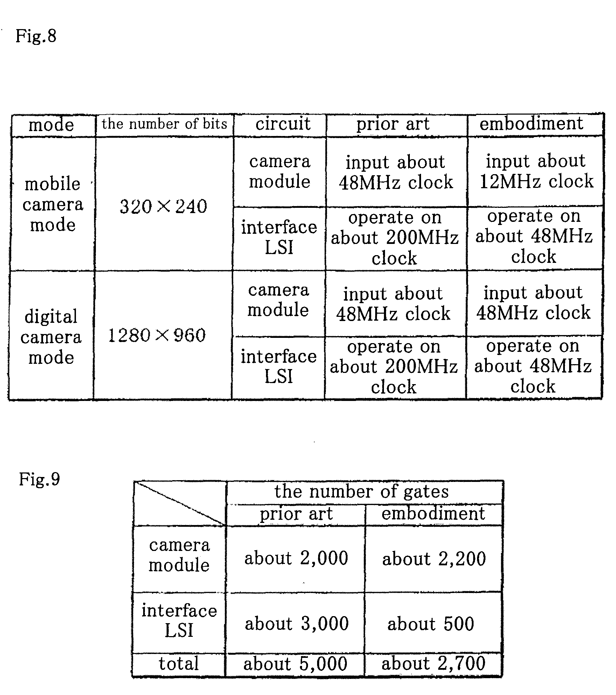

Fig. 8 illustrates the results of the comparison made between the prior art and the present embodiment in terms of the operating clock for the camera module and interface LSI in the mobile camera mode and digital camera mode. As can been seen from Fig. 8, in the present embodiment, the frequency of the operating clock for interface LSI 52 is about 48 MHz in either mode, while in the prior art shown in Fig. 1, the frequency of the operating clock for the interface LSI needs to be about 200 MHz in order to exhibit the capability equivalent to the present embodiment, thus yielding detrimental influence of noise.

Fig. 9 illustrates the results of the comparison made between the prior art and the present embodiment in terms of the number of gates constituting the camera module and the interface LSI. As can seen from Fig. 9, although the number of gates for the camera module is somewhat increased in the present embodiment because of the provision of external RAM 63, the number of gates for the interface LSI in the present embodiment is about one sixth the number of gates in the prior art. This is because the compression-coding processing of still image data is performed in camera module 51 in the present embodiment, leading to less competition for the use of memory in the interface LSI to limit the storage capacity of memory 83 to 320 kilobytes. Consequently, the total number of gates in the camera module and the interface LSI of the present embodiment decreases to about one half that of the prior art. This makes it possible to significantly reduce the chip area of interface LSI 52, resulting in the reduction of the price of interface LSI 52 and hence the price of a camera-equipped mobile terminal.

While a preferred embodiment of the present invention has been described in detail with reference to the drawings, the concrete construction thereof is not limited to the present embodiment and various changes and modifications may be made without departing the gist of the present invention.

For example, the above embodiment has represented an example in which camera sensor 61 provides an analog picture signal $S_p$ composed of analog picture red, green and blue signals by using red (R), green (G) and blue (B) optical filters $17_R$, $17_G$ and $17_B$. The present invention, however, is not limited thereto. Camera sensor 61 may be constructed to provide an analog picture signal composed of, for example, analog picture yellow, magenta, cyan and green signals by using optical filters of yellow, magenta and cyan which are the complementary colors of the three primary colors composed of red (R), green (G) and blue (B), and further green.

While the above embodiment has represented an example in which camera sensor 61 is a CMOS sensor, camera sensor 61 is not limited to CMOS sensor, and may be a CCD (Charge Coupled Device) sensor.

Furthermore, the above embodiment has represented an example in which both of main LC panel 54 and sub LC panel 55 are provided. The present invention, however, is not limited thereto, but may be provided with either one of the two panels. In addition, the display device of the camera-equipped mobile terminal is not limited to an LC panel, but may be an organic EL (electroluminescent) panel or a PDP (plasma display panel.)

Furthermore, the above embodiment has represented an example of supplying a clock having a frequency of about 48 MHz from interface LSI 52 to camera module 51 in the digital camera mode. The frequency, however, is not limited thereto, but a clock having a frequency of about 12 MHz or about 24 MHz may be supplied from interface LSI 52 to camera module 51 in the digital camera mode. In this case, image data $D_{P1}$ of a frame may not be buffered in external RAM 63 every prescribed number of frames, but image data $D_{P1}$ of specified frames may be successively stored in external RAM 63 to be subject to the compression-coding processing by encoder 74.

Further, the above embodiment has represented an example in which external RAM 63 has a double buffering configuration composed of one-sided memory area $63_a$ and two-sided memory area $63_b$ in the digital camera mode. The external RAM 63 is not limited thereto, but may be of a configuration made up of a plurality of multi-sided frame buffers, for example, a three-sided, four-sided or five-sided frame buffer.

Furthermore, while the above embodiment has presented an example in which the compression-coding processing is performed for every frame, the processing is not limited thereto. For example, when continuous shooting, in which still pictures are continuously taken, is required, by starting to buffer image data $D_{P1}$ of any frame into external RAM 63 while CPU 53 is acquiring the compression-coded image data of the preceding frame $D_{P2}$, CPU 53 can acquire compression-coded still image data $D_{P2}$ without degrading real-time operation, thereby realizing continuous shooting of still images.

Still furthermore, the above embodiment has represented an example of processing still image data in JPEG format. However, the present invention is not limited thereto, and still image data in PNG (Portable Network Graphic) format or still image data in GIF (Graphic Interchange Format) format may be processed.

Still furthermore, while the above embodiment has represented an example of providing adjusting circuit 72 in DSP 62, adjusting circuit 72 may be eliminated.

Furthermore, while the above embodiment has represented an example in which image data $D_{P2}$ are supplied from camera module 51 to interface LSI 52 via serial bus 78, image data $D_{P2}$ may be supplied from camera module 51 via a parallel bus to interface LSI 52.

In addition, while the above embodiment has presented an example of processing still image data, moving image data may be processed. The moving image data format includes MPEG (Moving Picture Expert Group) 4 format etc. When this moving image data is processed in the digital camera mode, moving image data $D_{P1}$, temporally stored in external RAM 63 for every plurality of frames, are sequentially read and the moving image data $D_{P2}$, which have been subjected to the compression-coding processing, are successively stored in an occupied area of external RAM 63. On completion of the compression-coding processing, the completion is notified to interface LSI 52 and further to CPU 53 for every key frame of moving image data $D_{P2}$. In response to this notification, CPU 53 can capture, at a required timing, moving image data $D_{P2}$ stored in external RAM 63, through register 80 constituting interface LSI 52. Alternatively, a streaming supply mode may be provided in which a dedicated bus may be provided for supplying moving image data $D_{P2}$ to interface LSI 52 as stream data, and a stream of moving image data $D_{P2}$ may be supplied to interface LSI 52 via the dedicated bus as requested by CPU 53. In this case, it is necessary to provide FIFO memory for introducing moving image data $D_{P2}$ in interface LSI 52 in order to prevent moving image data $D_{P2}$ from being lost even when CPU 53 cannot acquire moving image data $D_{P2}$ due to fact that CPU 53 is processing another task, etc.

**Claims**

1.  A camera-equipped mobile terminal, comprising a camera module, a control unit, a display device, an interface unit arranged between said camera module, said control unit and said display device,
    said camera module including a camera sensor that records with a resolution of a first number of pixels and provides a picture signal in a first format corresponding to a picture that has been shot, a digital signal processor that performs image processing on said picture signal and an external memory having a power supply that is turned off in a mobile camera mode,
    said digital signal processor including an analog/digital converter that converts said picture signal to a first image data, an internal memory, an encoder that performs compression-coding processing to convert said first image data into a second image data, a resize processing unit that resizes said first image data into a third image data having a second number of pixels, and a format transforming unit that transforms said third image data into a fourth image data in a second format and supplies the fourth image data to said interface unit via a first bus to display said fourth image data on said display device for a camera finder,
    wherein said encoder, in a digital camera mode, executes, after said first image data has been temporarily buffered into said external memory, the compression-coding process on said first image data read from said external memory to produce said second image data in a time-division manner using said internal memory as buffer, during a vacant time period in which no process is performed in said resize processing unit and said format transforming unit, and then stores said second image data in said external memory; and in a mobile camera mode, executes, after said first image data has been temporarily buffered into said internal memory, the compression-coding process on said first image data read from said internal memory to produce said second image data in a time-division manner using said internal memory as buffer during said vacant time period, and then stores the second image data in said internal memory, and
    said control unit, in the digital camera mode, captures said second image data stored in said external memory via a second bus and said interface unit, as required, and in the mobile camera mode, captures said second image data stored in said internal memory via said second bus and said interface unit, as required.

2.  A camera-equipped mobile terminal according to claim 1, wherein said external memory has a multibuffering configuration in said digital camera mode.

3.  A camera-equipped mobile terminal according to claim 1, wherein said encoder, in said digital camera mode and said mobile camera mode, performs said compression-coding processing of one frame of image data during a vacant time period in a time period during which three frames of image data are processed in said resize processing unit and said format transforming unit.

4.  A camera-equipped mobile terminal according to claim 1, wherein, in said digital camera mode and said mobile camera mode, when continuous shooting, in which still pictures are continuously taken, is required, said digital signal processor, while said control unit is capturing a frame of said second image data, starts to buffer the next frame of said second image data into said external memory,

5.  A camera-equipped mobile terminal according to any one of claims 1 through 3, wherein when processing moving image data in said digital camera mode, said digital signal processor successively reads said first image data temporarily stored in said external memory for every plurality of frames and successively stores said second image data, subjected to the compression-coding process performed by said encoder, in said external memory, and on completion of said compression-coding process, notifies said interface unit and said control unit that the compression-coding process has been completed for every key frame of said second image data.

6.  A camera-equipped mobile terminal according to any one of claims 1 through 3, including a streaming supply mode in which, when moving image data are processed in said digital camera mode, a dedicated bus is provided between said camera module and said interface unit, though which said digital signal processor supplies said moving image data to said interface unit as streaming data, as requested by said control unit.

**EP 1 575 278 A1**

**7.** A camera-equipped mobile terminal according to claim 6, wherein said interface unit further comprises a first-in first-out memory to capture said moving image data.

Fig.1

Fig.2

Fig.3

Fig.4

Fig.5

Fig.6

Fig.7

EP 1 575 278 A1

| mode | camera module | | | interface LSI |
|---|---|---|---|---|
| | the number of bits | role of internal RAM | role of external RAM | |
| mobile camera mode | 320×240 | compression coding processing buffer frame buffer data buffer | inactive state | • operate on 48MHz clock • supply 12MHz clock to camera module |
| digital camera mode | 1280×960 | compression coding processing buffer | frame buffer data buffer | • operate on 48MHz clock • supply 48MHz clock to camera module |

Fig.8

| mode | the number of bits | circuit | prior art | embodiment |
|---|---|---|---|---|
| mobile camera mode | 320 × 240 | camera module | input about 48MHz clock | input about 12MHz clock |
| | | interface LSI | operate on about 200MHz clock | operate on about 48MHz clock |
| digital camera mode | 1280 × 960 | camera module | input about 48MHz clock | input about 48MHz clock |
| | | interface LSI | operate on about 200MHz clock | operate on about 48MHz clock |

Fig.9

| | the number of gates | |
|---|---|---|
| | prior art | embodiment |
| camera module | about 2,000 | about 2,200 |
| interface LSI | about 3,000 | about 500 |
| total | about 5,000 | about 2,700 |

<div align="center">

**INTERNATIONAL SEARCH REPORT**

</div>

| | |
|---|---|
| | International application No.<br>PCT/JP03/15652 |

**A. CLASSIFICATION OF SUBJECT MATTER**
Int.Cl$^7$ H04N5/232

According to International Patent Classification (IPC) or to both national classification and IPC

**B. FIELDS SEARCHED**

Minimum documentation searched (classification system followed by classification symbols)
Int.Cl$^7$ H04N5/222-5/257

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2004 |
| Kokai Jitsuyo Shinan Koho | 1971-2004 | Toroku Jitsuyo Shinan Koho | 1994-2004 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2001-238190 A (Canon Inc.),<br>31 August, 2001 (31.08.01),<br>Full text<br>(Family: none) | 1-7 |
| P,A | JP 2003-101890 A (Sharp Corp.),<br>04 April, 2003 (04.04.03),<br>Full text<br>(Family: none) | 1-7 |
| P,A | JP 2003-111012 A (Olympus Optical Co., Ltd.),<br>11 April, 2003 (11.04.03),<br>Full text<br>(Family: none) | 1-7 |

| | | |
|---|---|---|
| ☒ Further documents are listed in the continuation of Box C. | ☐ See patent family annex. | |

| | |
|---|---|
| * Special categories of cited documents:<br>"A" document defining the general state of the art which is not considered to be of particular relevance<br>"E" earlier document but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| | |
|---|---|
| Date of the actual completion of the international search<br>10 March, 2004 (10.03.04) | Date of mailing of the international search report<br>23 March, 2004 (23.03.04) |
| Name and mailing address of the ISA/<br>Japanese Patent Office | Authorized officer |
| Facsimile No. | Telephone No. |

Form PCT/ISA/210 (second sheet) (July 1998)

## INTERNATIONAL SEARCH REPORT

International application No.

PCT/JP03/15652

C (Continuation).   DOCUMENTS CONSIDERED TO BE RELEVANT

| Category* | Citation of document, with indication, where appropriate, of the relevant passages | Relevant to claim No. |
|---|---|---|
| E,A | JP 2004-007436 A   (Casio Computer Co., Ltd.), 08 January, 2004 (08.01.04), Full text (Family: none) | 1-7 |
| P,A | JP 2003-037808 A   (Casio Computer Co., Ltd.), 07 February, 2003 (07.02.03), Full text (Family: none) | 1-7 |
| P,A | JP 2002-330472 A   (Canon Inc.), 15 November, 2002 (15.11.02), Full text (Family: none) | 1-7 |

Form PCT/ISA/210 (continuation of second sheet) (July 1998)